# EUROPÄISCHE PATENTSCHRIFT

(11) **EP 2 567 423 B1**
(45) Veröffentlichungstag und Bekanntmachung des Hinweises auf die Patenterteilung: **04.01.2017**
(21) Anmeldenummer: 11716928.4
(22) Anmeldetag: 29.04.2011
(51) Int. Cl.: F28F 3/02, H01M 10/613, H01M 10/6556

(54) **Batteriekühler**
Battery cooling device
Dispositif de refroidissement d'une batterie

(30) Priorität: 05.05.2010 DE 102010019369
(43) Veröffentlichungstag der Anmeldung: 13.03.2013
(73) Patentinhaber: Mahle International GmbH, 70376 Stuttgart (DE)
(72) Erfinder: BAUER, Swen -Juri, 70374 Stuttgart (DE); GRÜNER, Andreas, 73110 Hattenhofen (DE); SCHÜTZLE, Roland, 70469 Stuttgart (DE)
(74) Vertreter: BRP Renaud & Partner mbB Rechtsanwälte Patentanwälte Steuerberater
(86) Internationale Anmeldenummer: PCT/EP2011/056854
(87) Internationale Veröffentlichungsnummer: WO 2011/138246

(56) Entgegenhaltungen:
- EP-A1- 1 544 564
- EP-A1- 1 748 270
- EP-A1- 1 990 860
- DE-A1- 4 009 556
- JP-A- 2011 025 790
- US-A- 5 417 280
- US-A- 5 558 958
- US-A- 5 981 098
- US-A1- 2006 246 348
- US-A1- 2007 020 505
- US-A1- 2008 152 983

## Beschreibung

Die vorliegende Erfindung betrifft eine Kühleinrichtung zur Kühlung von Baukomponenten gemäß dem Oberbegriff des Anspruchs 1. Die Erfindung betrifft außerdem einen Batteriekühler mit zumindest einer Batterieeinheit/Batteriezelle und einer diese kühlenden Kühleinrichtung.

Aus der WO 2008/027343 A1 ist eine Kühleinrichtung mit einem Gehäuse und mehreren in diesem Gehäuse angeordneten Batteriezellen bekannt.

Aus der US 5,372,187 ist eine gewellte Lamelle bekannt, deren Wellung allerdings der Erhöhung der Turbulenz der strömenden Luft dient.

Aus dem Dokument US2006/246348, das als nächstliegender Stand der Technik angesehen werden kann, ist eine Kühleinrichtung für eine Batteriezelle bekannt, die aus zwei über eine Zwischenlage verbundenen gewellten Kühllamellen besteht.

Bekannt sind auch Wärmetauscher, beispielsweise Wasserkühler oder Ölkühler, die in der Regel aus flüssigkeitsführenden Wärmetauscherrohren und Kühllamellen bestehen, wobei sich zwischen je zwei Wärmetauscherrohren eine Kühllamelle befindet. Auch in jedem Wärmetauscherrohr kann sich eine Turbulenzlamelle befinden, die strukturell gleich oder ähnlich aufgebaut ist wie die Kühllamelle. Je nach Aufbau des Wärmetauschers werden dabei die Wärmetauscherrohre und die Kühllamelle in der gleichen Richtung, oder der Gegenrichtung oder senkrecht zueinander durchströmt.

Bei Kühleinrichtungen besteht oftmals das Problem, dass Kühllamellen derartiger Kühleinrichtungen hohen Temperatur(wechsel-)belastungen ausgesetzt sind und dadurch vergleichsweise hohe Temperaturdehnungen aufweisen. Generell sollten die Kühleinrichtungen mit geringen Fertigungstoleranzen hergestellt werden, insbesondere auch, um bei hohen Temperaturdehnungen eine optimale Wärmeübertragung gewährleisten zu können. Derartige geringe Fertigungstoleranzen machen jedoch die Herstellung der Kühleinrichtungen vergleichsweise aufwändig und teuer. Desweiteren kann es bei der Verwendung der Kühleinrichtungen in Kraftfahrzeugen zu Vibrationen kommen, die auch auf die Kühleinrichtung übertragen werden. Bei nicht mit einander verlöteten Komponenten kann es dadurch zu einer Reduzierung der Wärmeübertragung zwischen den einzelnen Komponenten kommen. Eine weitere mögliche Problemquelle sind mögliche Ausdehnungen der zu kühlenden Komponenten.

Die vorliegende Erfindung beschäftigt sich mit dem Problem, für eine Kühleinrichtung der gattungsgemäßen Art eine verbesserte Ausführungsform anzugeben, die insbesondere höhere Fertigungstoleranzen erlaubt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einzelne Kühllamellen der Kühleinrichtung elastisch auszubilden, wodurch diese in der Lage sind vergleichsweise große Temperaturdehnungen beeinträchtigungslos aufzunehmen und wodurch diese gleichzeitig in der Lage sind, höhere Fertigungstoleranzen zu kompensieren. Die erfindungsgemäße Kühleinrichtung ist dabei zur Kühlung von Baukomponenten ausgebildet und weist zumindest zwei mäanderförmig verlaufende Kühllamellen auf, die luft- oder kühlmitteldurchströmt sind. Diese mindestens zwei Kühllamellen weiser entlang ihres Verlaufs zusätzlich eine wellen- und/oder stufenartige Gestalt auf und sind dadurch elastisch ausgebildet und - wie oben erwähnt - in der Lage, Fertigungstoleranzen, Temperaturdehnungen und andere im Betrieb auftretende Verformungen vergleichsweise einfach - nämlich elastisch - und vor allen Dingen beeinträchtigungslos aufzunehmen. Bei bisher bekannten unverlöteten mäanderförmigen Kühllamellen war dies nicht möglich, da diese Kühllamellen in sich so steif waren, dass bei hinreichend großen Temperaturdehnungen bereits ein Ablösen von den zu kühlenden Bauteilen und damit eine Abschwächung der Wärmeübertragung zu befürchten war. Die erfindungsgemäße wellen- und/oder stufenartige Gestalt der Kühllamellen ermöglicht ein elastisches Nachgeben sowohl bei auftretenden hohen Temperaturdehnungen, anderweitigen Verformungen als auch zur Kompensation von Fertigungstoleranzen, wodurch nicht nur höhere Fertigungstoleranzen tolerierbar sind, sondern zudem auch eine optimale Wärmeübertragung in allen auftretenden Temperaturbereichen gewährleistet werden kann, da insbesondere eine die Kühlwirkung beeinträchtigende Unterbrechung der Wärmeübertragung, insbesondere durch ein Ablösen der Kühllamellen von den zu kühlenden Bauteilen, zuverlässig verhindert werden kann.

Bei einer vorteilhaften Weiterbildung der erfindungsgemäßen Lösung, weisen die Kühllamellen eine Treppenform auf, die zumindest eine, vorzugsweise aber auch mehrere Stufen besitzen kann. Diese ein- bzw. mehrstufige Treppenform ermöglicht wiederum ein elastisches Ausweichen der einzelnen Kühllamellen, insbesondere bei Temperaturdehnungen und/oder zur Kompensation von Fertigungstoleranzen, wobei sich die Stufung, ebenso wie bspw. eine Wellenform, fertigungstechnisch einfach und dadurch auch kostengünstig herstellen lassen.

Bei einer weiteren vorteilhaften Ausführungsform der erfindungsgemäßen Lösung, sind die Kühllamellen aus gewelltem Blech ausgebildet, das abschließend in eine große Wellenform überführt, d. h. geformt, wird. Zur Herstellung der erfindungsgemäßen Kühllamellen wird somit zunächst ein ebenes Blech gewellt und dieses dann anschließend mäanderförmig gebogen, sodass der für die erfindungsgemäße Kühllamelle charakteristische Verlauf entsteht. Die Kühllamelle kann in diesem Fall in einer einzigen Umformmaschine, bspw. durch hintereinander angefügte und entsprechend ausgebildete Walzen bzw. Biegestempel geformt werden.

Die erfindungsgemäße Kühleinrichtung wird insbesondere in einem Batteriezellenstapel bei einem Batteriekühler verwendet, bei welchem beim Laden der Batteriezellen hohe Temperaturen auftreten können. Auch bei hoher Belastung/Temperatur, insbesondere im Fahrbetrieb, kann eine Kühlung erforderlich werden. Die Kühllamellen bilden dabei mit der Batteriezelle geschlossene Kühlkanäle, die bspw. luft- oder kühlmitteldurchströmt sind und dadurch die Kühlwirkung für die zu kühlenden Batteriezellen verstärken. In diesem Fall wird die Einheit gelötet oder geschweißt oder sonst wie miteinander verbunden, so dass die Kühllamellen fest mit der Zwischenlage verbunden sind. Je nach Bedarf wird dann zwischen je zwei benachbarte Batteriezellen eine solche Einheit als Kühleinrichtung eingesetzt. Wie viele davon in einem Batteriezellenstapel zum Einsatz kommen hängt von der benötigten Kühlleistung ab. Ein derartiger Batteriekühler wird insbesondere in Elektro- oder Hybridfahrzeugen, aber auch in normalen Kraftfahrzeugen eingesetzt, um eine Temperaturbelastung der Batterie zu reduzieren und dadurch deren Leistung bzw. deren Lebensdauer zu erhöhen. Die Batteriezellen sind vorzugsweise parallel zueinander angeordnet, wobei zwischen einzelnen Batteriezellen oder an deren jeweiligen Stirnseiten zumindest eine Kühllamelle angeordnet ist. Besonders die zwischen den einzelnen Batteriezellen gewählte Anordnung der Kühllamellen sorgt für einen hohen Wärmetausch und dadurch für eine gute Kühlung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine nicht erfindungsgemäße Kühleinrichtung in einer Schnittdarstellung,
- Fig. 2: eine mögliche nicht erfindungsgemäße Ausführungsform von Kühllamellen,
- Fig. 3: eine Darstellung wie in Fig. 2, jedoch mit anders geformten Kühllamellen.
- Fig. 4: ein Beispiel einer weiteren möglichen Ausführungsform der Kühllamelle,
- Fig. 5: einen erfindungsgemäßen Batteriekühler,
- Fig. 6: eine weitere Ausführungsform des erfindungsgemäßen Batteriekühlers.

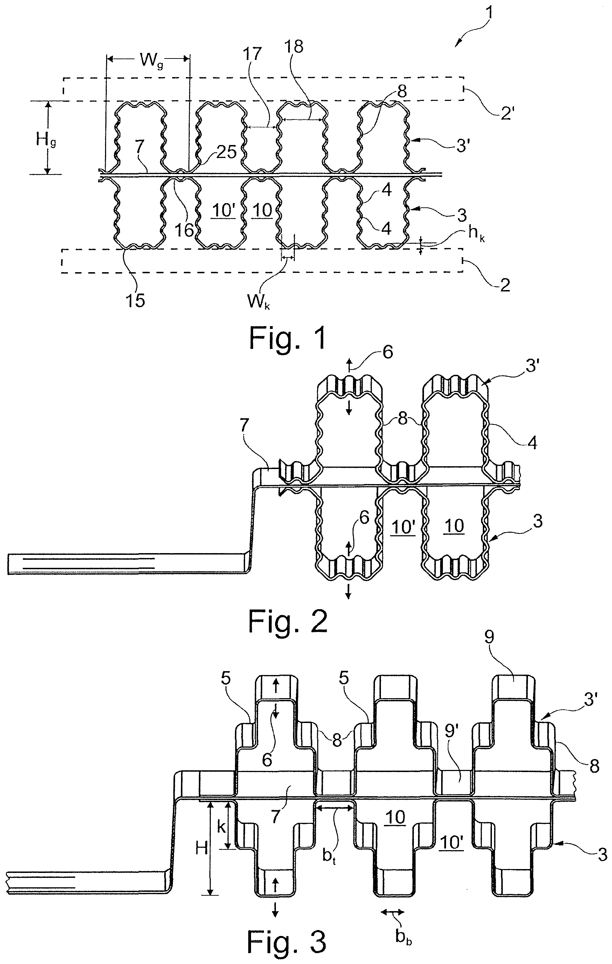

Entsprechend der Fig. 1, weist eine Kühleinrichtung 1 zur Kühlung Baukomponenten 2, 2' zwei mäanderförmig verlaufende Kühllamellen 3, 3' auf, die luft- oder kühlmitteldurchströmt sind. Wie den Figuren 1 bis 3 zu entnehmen ist, weisen dabei die erfindungsgemäßen Kühllamellen 3 entlang ihres Verlaufs eine wellenartige Gestalt (vgl. Fig. 1 und 2) oder aber eine stufenartige Gestalt (vgl. Fig. 3) auf und sind dadurch vergleichsweise elastisch ausgebildet. Die Kühleinrichtung 1 ist als Batteriekühler ausgebildet, wobei die Baukomponenten 2, 2' Batteriezellen sind, bei denen es erforderlich ist eine sich erwärmende Baukomponenten-Oberfläche zu kühlen. Es ist in diesem Fall nicht erforderlich, dass innerhalb der Baukomponente 2, 2' ein Medium strömt. Eine solche Baukomponenten-Oberfläche kann zum Beispiel bei Batteriezellen vorliegen, die nach Benutzung an einer Ladestation schnell aufgeladen werden. Eine Kühlung derartiger Baukomponenten-Oberflächen, das heißt Oberflächen von Batteriezellen, kann auch beim Fahren erforderlich sein. Es kann auch die Oberfläche eines Computerprozessors sein, der bei Benutzung dauerhaft gekühlt werden muss.

Die hier gezeigte Kühllamelle 3 kann bei Bedarf in den Seitenflächen 8 Schlitze enthalten (nicht gezeigt).

Generell können die erfindungsgemäß gewellt- oder stufenartig ausgebildeten Kühllamellen 3,3' aus bereits vorgewelltem Blech hergestellt werden, das abschließend in eine große Wellenform überführt ist. In diesem Fall wird somit zunächst das noch ebene Blech mit kleinen Wellen 4 versehen und anschließend in die Mäanderform überführt bzw. gebogen.

Anhand der Fig. 1 kann man den charakteristischen Aufbau der Kühleinrichtung 1 sehen. Die Kühleinrichtung 3 wird aus drei Blechen 3, 3'und 7 zusammengesetzt, wobei die Bleche 3 und 3' bereits als Kühllamellen 3 und 3'ausgebildet sind. Die Kühllamellen 3 und 3'sind vor dem Zusammenfügen bereits mit einer kleinen Wellung 4 und einer großen Wellung versehen worden. Die kleine Wellung 4 hat die Wellenlänge Wₖ mit einer Amplitude hₖ. Die große Wellung hat die Wellenlänge Wg und die Amplitude H_{g} mit Wellentälern 15 und Wellenbergen 16. Die Breite der Wellenberge 18 und die Breite der Wellentäler 17 muss nicht, kann aber gleich groß sein. Im gezeigten Beispiel sind für die Kühllamelle 3 die Wellenberge 15 schmaler also die Breite 17 kleiner, als die Breite 18. Die Bezeichnung Wellenberg und -Tal ist auch andersherum möglich. Bzw. bei der Kühllamelle 3' ist alles genau umgekehrt zur Kühllamelle 3, da die beiden Kühllamellen 3 und 3' gegengleich zueinander angeordnet sind.
Die breiteren Wellentäler 15 der Kühllamelle 3 berühren die zu kühlenden Baukomponentenoberfläche der Baukomponente 2. Die kleinere Wellung 4, die auch in der Anlagefläche des Wellentals 15 vorkommt, ist für den Wärmeübertrag nicht störend.

Die Wellenlänge Wₖ der kleineren Wellung ist erheblich kleiner als die der großen Wellung Wg, ideal ist ein Verhältnis von Wₖ zu W_{g} von etwa 1 zu 4 oder 1 zu 5. Es ist aber vom jeweiligen Einsatz der Kühleinrichtung abhängig wie das Verhältnis genau gewählt wird. Auch die Amplituden hₖ und Hg der beiden Wellungen sind verschieden groß. Das Verhältnis von hₖ zu Hg ist etwa 1 zu 10. Je nach Bedarf kann es aber auch ganz anders sein. Jedoch muss die Amplitude hₖ der Wellung 4 so klein bleiben, dass sie den Wärmeübertrag in den Wellentälern 15 im Anlagebereich 9 der großen Wellung nicht beeinträchtigt.

An den Stellen 25 wo das Wellental 15 in die Wellenflanke 8 übergeht und die Wellenflanke 8 in den Wellenberg übergeht ist keine Wellung 4 vorgesehen. Diese Stellen 25 sind gerade. Durch das Zusammenspiel der geraden Stellen 25 mit der Wellung 4 in den Wellenflanken 8 wird die Elastizität der Kühleinrichtung 1 erreicht. Es ist auch möglich in den Wellenflanken 8 eine Wellung 4 vorzusehen, die eine größere Amplitude hₖ aufweist als die Wellung 4 in den Wellenbergen 16 und -Tälern 15. Auch die Stellen 25 weisen je nach Wahl des Kühllamellen-Formwerkzeuges entweder eine gerade Form oder aber eine gekrümmte Form auf.

Die drei Bleche 3, 3'und 7 die zusammen die Kühleinrichtung 1 bilden, sind miteinander durch Verschweißen, Verkleben, Verpressen oder Verlöten verbunden. Dadurch bilden sie eine transportable und handhabbare Einheit, die beim Zusammenbau von nicht gelöteten Wärmetauschern mit den Baukomponenten 2 abwechselnd gestapelt werden. Um einen Batteriekühler aufzubauen kann mindestens eine Kühleinrichtung 1 zwischen zwei Paketen an Batteriebaukomponenten eingebaut werden. Je nach Art des Batteriekühlers wird die gesamte Batterie inklusive Kühleinrichtung 1 von einem Rahmen oder einer anderen geeigneten Vorrichtung zusammengehalten.

Durch den stufenartigen bzw. wellenartigen Verlauf der Kühllamellen 3, 3', sind diese in der Lage, sowohl größere Temperaturdehnungen als auch Fertigungstoleranzen beeinträchtigungslos aufzunehmen und zu kompensieren. Bei herkömmlichen, lediglich die Mäanderform, nicht jedoch aber die wellen- oder stufenartige Gestalt aufweisenden Kühllamellen, waren lediglich geringe Fertigungstoleranzen hinnehmbar, um eine Unterbrechung der Wärmeübertragung, bspw. durch ein Ablösen der Kühllamelle von der zu kühlenden Baukomponente 2, 2' zuverlässig vermeiden zu können. Durch die vergleichsweise elastische Ausbildung der erfindungsgemäßen Kühllamellen 3, 3', können diese auch größere Fertigungstoleranzen bzw. höhere Temperaturdehnungen problemlos aufnehmen, ohne dass dabei befürchtet werden muss, dass ein wärmeübertragender Kontakt zwischen den Kühllamellen 3,3' und den zu kühlenden Baukomponenten 2, 2' unterbrochen wird.

Betrachtet man die Kühllamellen 3,3' gemäß der Fig. 3, so kann man erkennen, dass diese eine Treppenform mit einer oder mehreren Stufen 5 in den Wellenflanken 8 aufweist. Auch eine derartige gestufte Gestalt hat ähnlich wie eine gewellte Gestalt (vgl. Fig. 1 und 2) eine gewisse Elastizität der Kühllamellen 3, 3' zur Folge, insbesondere in Richtung 6 und ist dadurch in der Lage, Temperaturdehnungen und/oder Fertigungstoleranzen und/oder andere Verformungen während des Betriebs leicht aufzunehmen.

Auch hier hat die Kühllamelle 3 eine Wellenlänge W mit einer Amplitude H, sowie Wellenbergen 16 und Wellentälern 15. Die Wellentäler 15 der Kühllamelle 3 haben in der Auflagefläche 9 keine kleine Wellung 4. Die Stufen 5 in den Wellenflanken 8 können in einem Abstand k der Anlageflächen 9 der Wellenberge 16 eingeformt sein. Das Verhältnis von k zu H kann etwa 1 zu 2 sein oder auch beliebig anders, je nach Anforderung an die Kühleinrichtung 1. Die Wellenberge 16 haben eine zugehörige Breite b_{b} und die Wellentäler haben eine zugehörige Breite bt. Im in Fig. 3 gezeigten Beispiel sind bt und b_{b} gleich groß. Auch dieses Verhältnis ist je nach Bedarf zu wählen. Die Kühllamellen 3 und 3'sind mit dem Blech 7 durch Schweißpunkte oder andere Verbindungsmöglichkeiten in den Auflageflächen 9' verbunden und bilden so die Kühleinrichtung 1. Die Anlageflächen 9 und 9' der Wellenberge bzw. -Täler können gleich groß sein, müssen es aber nicht.

Es können auch mehrere Stufen 5 in den Wellenflanken 8 vorgesehen werden. Das Beispiel in Fig. 3 zeigt relativ große Auflageflächen 9 und 9', je nach Anwendung der Kühleinrichtung 1 kann die Auflagefläche 9, die die Baukomponenten 2 berührt, groß sein während die Auflagefläche 9' zum Blech 7 minimal sein kann.

Erfindungsgemäß ist zwischen jeweils zwei Kühllamellenreihen 3,3' ein Blech als Zwischenlage 7 angeordnet, sodass, wie dies gemäß der Fig. 1 gezeigt ist, jeweils zwei Kühllamellenreihen 3,3' einerseits über die gemeinsame Zwischenlage 7 verbunden und andererseits an die jeweils zu kühlende Baukomponente 2,2' wärmeübertragend angebunden sind. Wobei das Blech 7 der Stabilisierung der Kühleinrichtung 1 dient. Erfindungsgemäß ist eine Mischform der Kühllamellen 3,3' vorgesehen, sodass diese an Stegen 8 eine gewellte Form aufweisen, wogegen sie an Anlagebereichen 9 und 9' (vgl. Fig. 3) eine ebene Gestalt aufweisen und dadurch einen flächigen und gut übertragenden Wärmekontakt zu der Blech 7 bzw. zu den zu kühlenden Baukomponenten 2,2' herstellen.

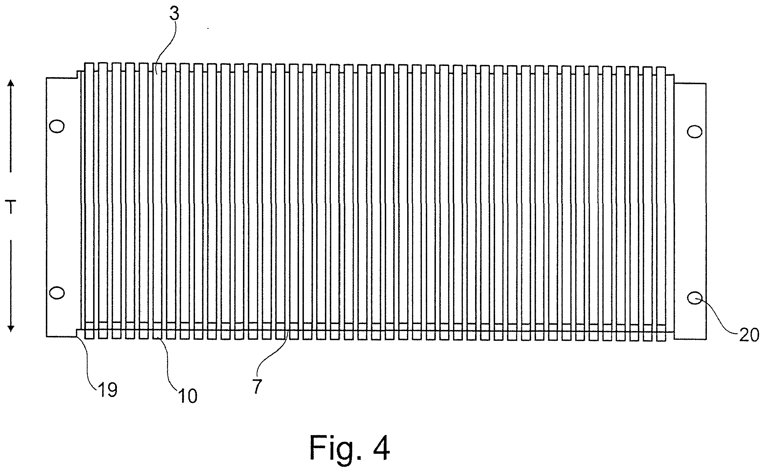

In Fig. 4 ist gezeigt wie so eine Kühllamelle 3 aussehen kann. Je nach Anwendungsfall können alle Abmessungen variiert werden. Die Kühleinrichtung 1 weist im Blech 7 am Rand Befestigungslöcher 20 auf. Mit diesen wird es an dem Rahmen einer Batterie befestigt, so dass die Kühleinrichtung 1 in Kontakt mit den Baukomponenten der Batterie ist. Es sind deutlich, die entlang der Länge T sich erstreckenden Kühlkanäle 10 und 10', zu sehen. Durch diese wird die Kühlluft geblasen um die Baukomponenten 2, 2' zu kühlen. Je nach Anwendungsfall und Aufbau der Batterie weist das Blech 7, das heißt die Zwischenlage 7, eine Abknickung 19 auf, damit die Kühleinrichtung 1 an dem Rahmen der Batterie befestigt werden kann oder an der nächstgelegenen Baukomponente 2.

Die kleinen Wellungen 4 und die großen Wellungen sind in T-Richtung gerade.

Die erfindungsgemäße Kühleinrichtung 1 wird insbesondere in einem Batteriezellenstapel bei einem Batteriekühler 30 verwendet, bei welchem beim Laden oder beim Betrieb der Batteriezellen 31 hohe Temperaturen auftreten können. Die Kühllamellen 3,3' bilden mit der zu kühlenden Baukomponente 2,2' bzw. mit dem Blech 7 geschlossene Kühlkanäle 10,10', die bspw. luft- oder kühlmitteldurchströmt sind und dadurch die Kühlwirkung für die zu kühlenden Baukomponenten 2,2' verstärken. In diesem Fall wird die in Fig. 4 gezeigte Einheit gelötet oder geschweißt oder sonst wie miteinander verbunden, so dass die Kühllamelle 3, 3' fest mit der Zwischenlage 7 verbunden ist. Je nach Bedarf wird dann zwischen je zwei benachbarte Batteriezellen 31 eine solche Einheit als Kühleinrichtung 1 eingesetzt. Wie viele davon in einem Batteriezellenstapel zum Einsatz kommen hängt von der benötigten Kühlleistung ab.

Mit den erfindungsgemäß gewellt und/oder gestuft ausgebildeten Kühllamellen 3,3' lassen sich somit höhere Fertigungstoleranzen kompensieren und gleichzeitig höhere Temperaturdehnungen aufnehmen, ohne dass dadurch eine Beeinträchtigung der Kühlwirkung befürchtet werden muss.

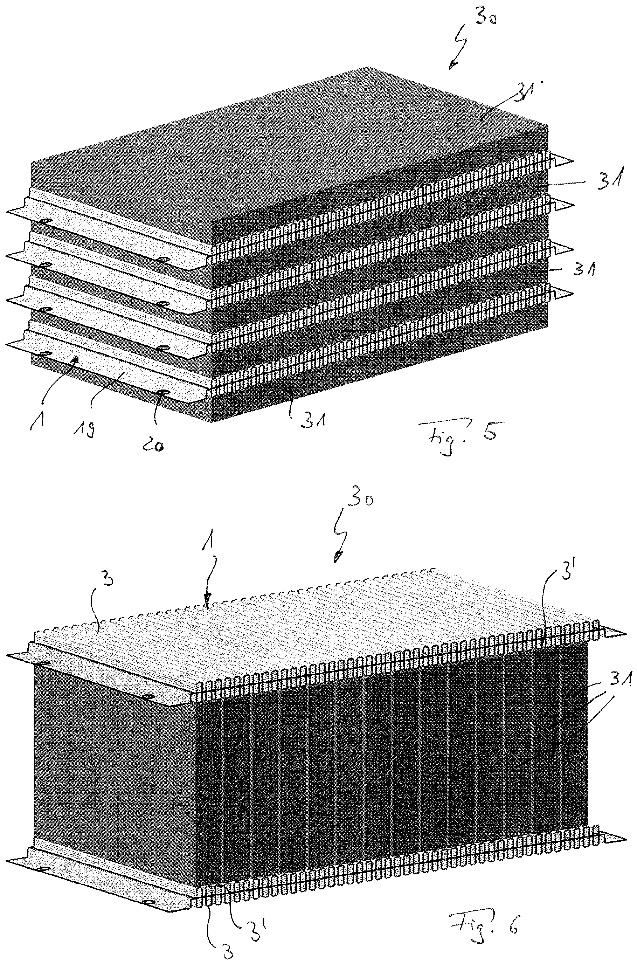

Entsprechend den Fig. 5 und 6 ist ein Batteriekühler 30 dargestellt, der üblicherweise eine Vielzahl von Batterieeinheiten, das heißt Batteriezellen 31, aufweist. Ein derartiger Batteriekühler 30 wird insbesondere in Hybrid- oder Elektrofahrzeugen, aber auch in normalen Kraftfahrzeugen eingesetzt, um eine Temperaturbelastung der Batterie zu reduzieren und dadurch deren Leistung bzw. deren Lebensdauer zu erhöhen. Zur Kühlung der Batterieeinheiten bzw. der Batteriezellen 31 kann dabei die erfindungsgemäße Kühleinrichtung 1 zum Einsatz kommen. Insbesondere bei Lithium-Ionen-Akkus kann eine Kühlung auch sicherheitsrelevant sein. Vor allem aber kann durch ein geeignetes Temperaturmanagement die Lebensdauer der Batteriezellen 31 erhöht werden.

Die Batteriezellen 31 sind vorzugsweise parallel zueinander angeordnet, wobei zwischen einzelnen Batteriezellen 31 oder an deren jeweiligen Stirnseiten zumindest eine Kühllamelle (3,3') angeordnet ist. Besonders die zwischen den einzelnen Batteriezellen 31 gewählte Anordnung der Kühllamellen 3,3' sorgt für einen hohen Wärmetausch und dadurch für eine gute Kühlung.

## Patentansprüche

1. Batteriekühler (30) mit zumindest einer Batteriezelle (31) und einer diese kühlenden Kühleinrichtung (1),
**dadurch gekennzeichnet,**
- **dass** die Kühleinrichtung (1) zumindest zwei mäanderförmig verlaufende Kühllamellen (3,3') mit einer kleinen Wellung (4) und einer großen Wellung aufweist, wobei die große Wellung Wellentäler (15), Wellenberge (16) und Wellenflanken (8), aufweist, und wobei die Kühllamellen (3,3') luft- oder kühlmitteldurchströmt sind,
- **dass** jeweils zwei Kühllamellen (3,3') einerseits über ein Blech (7) verbunden und andererseits an die jeweils zu kühlende Batteriezelle (31) angebunden sind, und
- **dass** die Kühllamellen (3,3') entlang ihres Verlaufs eine wellenartige Gestalt aufweisen und dadurch elastisch ausgebildet sind, derart, dass die Kühllamellen (3, 3') an den Wellenflanken (8) eine gewellte Form aufweisen, wogegen sie an Anlagebereichen (9,9') am Blech und an den zu kühlenden Batteriezellen eine ebene Gestalt aufweisen und dadurch einen flächigen und gut übertragenden Wärmekontakt zu dem Blech (7) bzw. zu den zu kühlenden Batteriezellen (31) herstellen.

2. Batteriekühler nach Anspruch 1,
**dadurch gekennzeichnet,**
**dass** die Kühllamelle (3,3') aus gewelltem Blech ausgebildet ist, das abschließend in eine große Wellenform geformt ist.

3. Batteriekühler nach Anspruch 1 oder 2,
**dadurch gekennzeichnet,**
**dass** die Kühllamelle (3,3') eine Treppenform aufweist.

4. Batteriekühler nach einem der vorgehenden Ansprüche,
**dadurch gekennzeichnet,**
**dass** die Kühllamellen (3,3') mit den zu kühlenden Batteriezellen (31) wärmeübertragend verbunden sind.

5. Batteriekühler nach einem der Ansprüche 1 bis 4,
**dadurch gekennzeichnet,**
**dass** die Batteriezellen (31) orthogonal oder parallel zu den Kühllamellen (3,3') angeordnet sind.

6. Batteriekühler nach einem der Ansprüche 1 bis 5,
**dadurch gekennzeichnet,**
**dass** mehrere Batteriezellen (31) vorgesehen sind, die jeweils parallel zueinander angeordnet sind.

7. Batteriekühler nach Anspruch 6,
**dadurch gekennzeichnet,**
**dass** zwischen einzelnen Batteriezellen (31) oder an deren jeweiligen Stirnseiten zumindest eine Kühllamelle (3,3') angeordnet ist.

8. Kraftfahrzeug, insbesondere ein Hybrid- oder Elektrofahrzeug, mit einem Batteriekühler (30) nach einem der vorhergehenden Ansprüche.

## Claims

1. Battery cooler (30) comprising at least one battery cell (31) and a cooling device (1) cooling said battery cell,
**characterised in that**,
- the cooling device (1) comprises at least two cooling fins (3,3') extending in a meandering shape, having a small corrugation (4) and a large corrugation, wherein the large corrugation comprises wave troughs (15), wave peaks (16) and wave flanks (8), and wherein air or refrigerant flows through the cooling fins (3,3'),
- each two cooling fins (3,3') are connected on one side via a plate (7) and on the other side are connected to the respective battery cell (31) to be cooled, and
- the cooling fins (3,3') have a wave-like shape along the course thereof and are thus resiliently formed, in such a way that the cooling fins (3,3') have a corrugated shape on the wave flank (8) while having a flat shape in the contact region (9,9') to the plate and to the battery cell to be cooled, and thus make a flat and good heat transferring contact to the plate (7) or to the battery cell to be cooled (31).

2. Battery cooler according to claim 1,
**characterised in that**,
the cooling fins (3,3') are formed from corrugated sheet metal, that is formed resulting in a large wave shape.

3. Battery cooler according to claim 1 or 2,
**characterised in that**,
the cooling fins (3,3') have a step-like shape.

4. Battery cooler according to any of the preceding claims,
**characterised in that**,
the cooling fins (3,3') are connected to the battery cell to be cooled (31) in a heat-transferring manner.

5. Battery cooler according to one of claims 1 to 4,
**characterised in that**,
the battery cells (31) are arranged orthogonal or parallel to the cooling fins (3,3').

6. Battery cooler according to one of claims 1 to 5,
**characterised in that**,
a plurality of battery cells (31) are provided, which are arranged parallel to one another.

7. Battery cooler according to claim 6,
**characterised in that**,
between individual battery cells (31) or on the respective end faces thereof, at least one cooling fin (3,3') is arranged.

8. Motor vehicle, in particular a hybrid or electric vehicle, comprising a battery cooler (30) according to any of the preceding claims.

## Revendications

1. Refroidisseur de batterie (30) comprenant au moins une cellule de batterie (31) et un système de refroidissement (1) refroidissant cette dernière,
**caractérisé en ce**
- **que** le système de refroidissement (1) présente au moins deux lamelles de refroidissement (3, 3') s'étendant de manière à présenter une forme sinueuse, avec une petite ondulation (4) et une grande ondulation, dans lequel la grande ondulation présente des creux d'ondulation (15), des sommets d'ondulation (16) et des flancs d'ondulation (8), et dans lequel les lamelles de refroidissement (3, 3') sont traversées par un flux d'air ou de liquide de refroidissement,
- **que** respectivement deux lamelles de refroidissement (3, 3') sont reliées d'une part par l'intermédiaire d'une tôle (7) et sont attachées d'autre part à la cellule de batterie (31) à refroidir respectivement,
- **que** les lamelles de refroidissement (3, 3') présentent, le long de leur profil, une configuration de type ondulée et sont de ce fait réalisées de manière élastique de telle manière que les lamelles de refroidissement (3, 3') présentent, au niveau des flancs d'ondulation (8), une forme ondulée, alors qu'elles présentent, au niveau de zones d'appui (9, 9') au niveau de la tôle et au niveau des cellules de batterie à refroidir, une configuration plane et établissent de ce fait un contact thermique en surface et à transfert satisfaisant avec la tôle (7) ou avec les cellules de batterie (31) à refroidir.

2. Refroidisseur de batterie selon la revendication 1,
**caractérisé en ce**
**que** la lamelle de refroidissement (3, 3') est réalisée à partir d'une tôle ondulée, qui est pour finir mise en forme en une forme ondulée de grande taille.

3. Refroidisseur de batterie selon la revendication 1 ou 2,
**caractérisé en ce**
**que** la lamelle de refroidissement (3, 3') présente une forme d'escalier.

4. Refroidisseur de batterie selon l'une quelconque des revendications précédentes,
**caractérisé en ce**
**que** les lamelles de refroidissement (3, 3') sont reliées, en assurant un transfert thermique, aux cellules de batterie (31) à refroidir.

5. Refroidisseur de batterie selon l'une quelconque des revendications 1 à 4,
**caractérisé en ce**
**que** les cellules de batterie (31) sont disposées de manière orthogonale ou de manière parallèle par rapport aux lamelles de refroidissement (3, 3').

6. Refroidisseur de batterie selon l'une quelconque des revendications 1 à 5,
**caractérisé en ce**
**que** sont prévues plusieurs cellules de batterie (31), qui sont disposées respectivement de manière parallèle les unes par rapport aux autres.

7. Refroidisseur de batterie selon la revendication 6,
**caractérisé en ce**
**qu'**au moins une lamelle de refroidissement (3, 3') est disposée entre diverses cellules de batterie (31) ou au niveau des côtés frontaux respectifs de ces dernières.

8. Véhicule automobile, en particulier véhicule hybride ou électrique, comprenant un refroidisseur de batterie (30) selon l'une quelconque des revendications précédentes.
